# EUROPEAN PATENT APPLICATION

(11) **EP 2 236 819 A1**
(43) Date of publication of application: **06.10.2010**
(21) Application number: 08704311.3
(22) Date of filing: 25.01.2008
(51) Int. Cl.: F03D 3/06

(54) **VERTICAL AXIS WIND TURBINE**

(71) Applicant: Noguchi, Tsuneo, Yamanakakomura Minamitsuru-Gun Yamanashi 4010502 (JP)
(72) Inventor: The designation of the inventor has not yet been filed
(74) Representative: Klunker . Schmitt-Nilson . Hirsch
(86) International application number: PCT/JP2008/051602
(87) International publication number: WO 2009/093337

(57) **Abstract**

In a vertical axis windmill in which a plurality of blades are provided at an equal angle interval centering around a vertical axis of rotation in a plane perpendicular to the vertical axis of rotation, the blade is formed by a streamline asymmetrical blade type having a lift coefficient of 1.0 or more, an outer surface of the blade being curved outside largely compared with an inner surface of the blade; a notched portion is formed in the inner surface of the blade by cutting off a portion starting from a predetermined position to a trailing edge; a thickness of the blade is set to 22% to 30% to a blade chord length of the blade; and the predetermined position is set behind a position of 45% and before a position of 65% to the blade chord length of the blade from a leading edge.

## Description

### TECHNICAL FIELD

The present invention relates to a vertical axis windmill used for a wind power generation or the like, and more specifically, to a vertical axis windmill in which an improvement in blade shapes has been achieved so that a power generation efficiency of the windmill can be increased.

### BACKGROUND ART

Generally, a horizontal axis windmill (propeller type windmill) in which an axis of rotation thereof is horizontal (parallel) to a wind direction, and a vertical axis windmill in which an axis of rotation thereof is perpendicular to a wind direction are known as a windmill for wind power generation.

Among them, a drag type windmill, such as a savonius type windmill, a paddle type windmill, or the like, in which the windmill is rotated by a savonius effect utilizing a drag acting to a part (blade) for generating an aerodynamic force of the windmill as a main rotating force of the windmill, and a dynamic lift type windmill, such as a Darius type windmill, a Gyromill type windmill, or the like, in which the windmill is rotated by a gyromill effect utilizing a component force of rotating direction of a lift acting to the blade as a main rotating force of the windmill, are known as the vertical axis windmill.

Meanwhile, a hybrid type vertical axis windmill which has been improved so as to have both of the aforementioned savonius effect and gyromill effect has been improved in recent years, and is disclosed in, for example, Japanese Patent No. 3451085.

In the vertical axis windmill disclosed in this Patent Document, a plurality of blades are provided at every constant angle centering around a vertical axis of rotation in a plane perpendicular to the vertical axis of rotation, and a blade type having a streamlined cross section shape used for airplanes represented by NACA-4 series blade type, an RAF blade type, a Gottingen blade type, or the like is used as the shape of these blades. Additionally, a notched portion formed by cutting off a portion starting from a position of 35% to 45% to a blade chord length from a leading edge up to a trailing edge is provided in an inner surface of the blade (surface on a side of the axis of rotation.)

In the vertical axis windmill having such a blade structure, the main rotating force is obtained by the savonius effect generated when the notched portion receives the wind from the back of the blade, in a low wind speed region including a rotation stop state (rotational state where a ratio of a rotational speed of the blade to the wind speed is less than 1), while the main rotating force is obtained by the gyromill effect generated to the wind from the front of the blade, in middle and high wind speed regions (rotational state where the ratio of the rotational speed of the blade to the wind speed is not less than 1).

However, there is a tendency that demand of the wind power generation is increased with an increased interest in natural energy sources in recent years, so that a windmill having more improved power generation efficiency has been required in a field of such a wind power generation.

Generally, the thickness of the blade of the streamlined blade type used for airplanes or the like represented by the NACA-4 series blade type, an RAF blade type, the Gottingen blade type, or the like has been about 12% to 15% to the blade chord length. The conventional windmill for wind power generation has used a blade type having such a shape as it is, and even when any changes have been made, the notched portion or the like has been only provided in a part of the blade as disclosed in Japanese Patent No. 3451085.

Although the power generation efficiency of the windmill can be surely improved by providing the notched portion in a part of the blade as disclosed in its document, there has been a limit in further improving the power generation efficiency of the windmill having the blade shape using the conventional blade type as described above, especially the blade shape using the blade type in which the thickness thereof is less than 15% to the blade chord length.

### DISCLOSURE OF THE INVENTION

Therefore, in view of the foregoing, it is an object of the present invention to provide a vertical axis windmill in which an improvement in a power generation efficiency over a wide range of wind speed regions is achieved by increasing a ratio of a thickness of a blade to its blade chord length, and providing a notched portion to be formed in a part of the blade in a most suitable position.

The aforementioned object of the present invention is achieved by a vertical axis windmill in which a plurality of blades are provided at an equal angle interval centering around a vertical axis of rotation in a plane perpendicular to the vertical axis of rotation, wherein the blades are a streamlined asymmetrical blade type formed so as to have a lift coefficient of 1.0 or more, an outer surface of the blade being largely curved outside as compared with an inner surface; the inner surface of the blade has a notched portion formed by cutting off a portion starting from a predetermined position to a trailing edge; the thickness of the blade is 15% to 30% to its blade chord length; and the predetermined position is behind a position of 45% and before a position of 65% to the blade chord length of the blade from a leading edge.

Moreover, the aforementioned object is effectively achieved by the vertical axis windmill, wherein the thickness of the blade is 25% to 30% to the blade chord length of the blade.

Further, the aforementioned object is effectively achieved by the vertical axis windmill, wherein the predetermined position is in a position of 45% to 55% to the blade chord length of the blade from the leading edge.

According to the vertical axis windmill in accordance with the present invention, the thickness of the plurality of blades provided at the equal angle interval centering around the vertical axis of rotation are set to 15% to 30% to the blade chord length of the blade, and the notched portion starting from behind a position of 45% and before a position of 65% to the blade chord length from the leading edge is formed in the inner surface of the blade. According to this blade structure, a Reynolds number of the blade in the low wind speed region (about 1 to 3 m/sec) is about 10⁵ or less, and a drag coefficient in this state can be increased (about 1.0), so that it is possible to maintain a high savonius effect. Additionally, since pressure distribution of the outer surface of the blade and the inner surface of the blade can be focused ahead due to this blade structure, a center of air pressure in the blade can be largely moved ahead to thereby increase a component force of rotating direction of a aerodynamic force. Namely, the shape of the blade in accordance with the present invention can greatly improve a gyromill effect in middle and high wind speed regions while maintaining the superior savonius effect in the low wind speed region. As a result of this, an improvement in the power generation efficiency can be achieved in a wide range of the wind speed regions from in a start-up to in the middle and high wind speeds, without providing a new mechanism or the like in order to improve performance of the blade, so that the windmill which has the superior generating capacity can be manufactured at low cost.

### BRIEF DESCRIPTION OF THE DRAWINGS

Fig. 1 is a top view showing a vertical axis windmill in accordance with an embodiment of the present invention;
Fig. 2 is a side view showing the vertical axis windmill seen from an arrow II direction in Fig. 1;
Fig. 3 is a principal part perspective view showing a blade of the vertical axis windmill in accordance with the embodiment of the present invention;
Fig. 4 is an explanatory view regarding a blade shape of the vertical axis windmill in accordance with the embodiment of the present invention;
Fig. 5 is a schematic sectional view showing a wind tunnel facility used for a power test of the vertical axis windmill in accordance with the embodiment of the present invention;
Fig. 6 is a schematic side view showing a Test blade used for the power test of the vertical axis windmill in accordance with the embodiment of the present invention;
Fig. 7 is a schematic side view showing the power generating efficiency experimental equipment used for the power test of the vertical axis windmill in accordance with the embodiment of the present invention;
Fig. 8 is a graph showing output results when a position of a notch starting point is changed while keeping a blade thickness of the blade constant; and
Fig. 9 a graph showing output results when the blade thickness is changed while keeping the position of the notch starting point of the blade constant.

### DESCRIPTION OF THE NUMERALS

1: Vertical axis windmill
2: Axis of rotation
3: Blade
3a: Outer surface of the blade
3b: Inner surface of the blade
4: Central hub pole
5: Supporting strut
8: Surface of the blade
B: Notched portion
C: Blade chord length
T: Blade thickness
P: Distance from blade leading edge to notch starting point

### BEST MODE(S) FOR CARRYING OUT THE INVENTION

Hereinafter, the best mode(s) for carrying out the present invention will be described with reference to the drawings.

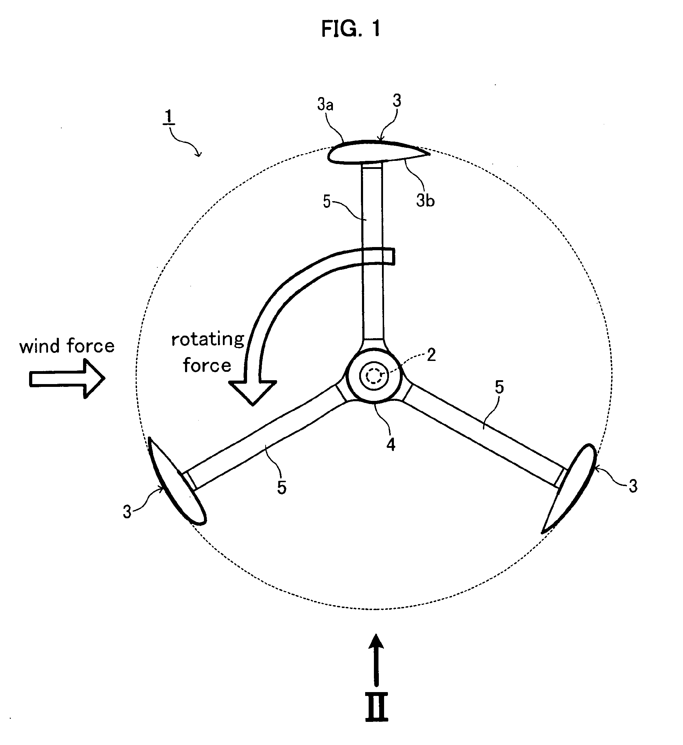

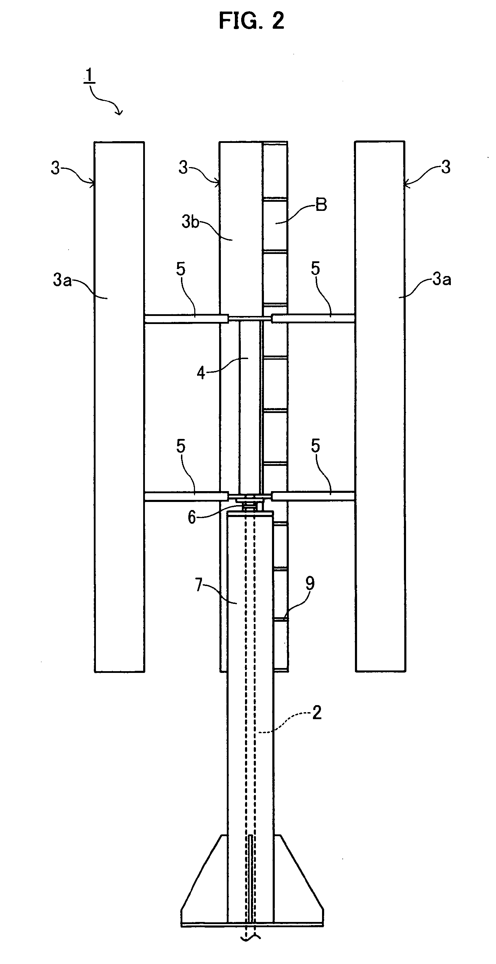

While Fig. 1 is a top view showing a vertical axis windmill in accordance with an embodiment of the present invention, Fig. 2 is a side view showing the vertical axis windmill seen from an arrow II direction in Fig. 1.

As shown in Figs. 1 and 2, a vertical axis windmill 1 in accordance with the present embodiment is provided with a vertical axis of rotation 2 whose lower end is coupled with a generator or the like (not shown), wherein three blades 3 of a blade type are arranged in parallel to the axis of rotation 2 at an equal angle interval (120 degrees interval in the present embodiment) along a circumferential direction of the same radius in a plane perpendicular to the axis of rotation 2. Each of the blades 3 is fixed to an end of a supporting strut 5 radially extended from a central hub pole 4 which is coaxially coupled with the axis of rotation 2 at a predetermined setting angle (90 degrees to the supporting strut 5 in the present embodiment). Additionally, a bearing 6 and a windturbine installing pole 7 are provided under the central hub pole 4 to rotatably support the axis of rotation 2 downwardly extending from the lower end of the central hub pole 4. In the vertical axis windmill 1 having such a configuration, a rotating force of the blades 3 obtained from the wind force is transmitted to the axis of rotation 2 via the supporting strut 5 and the central hub pole 4.

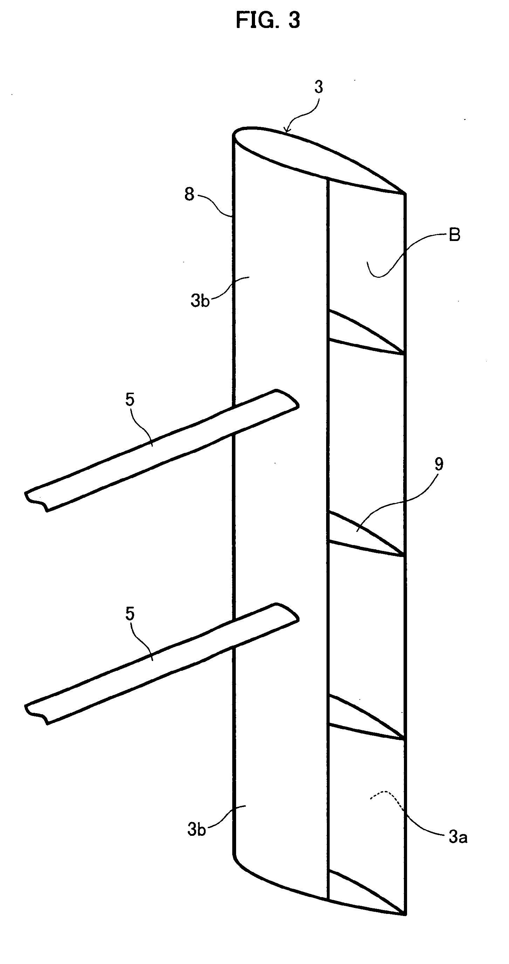

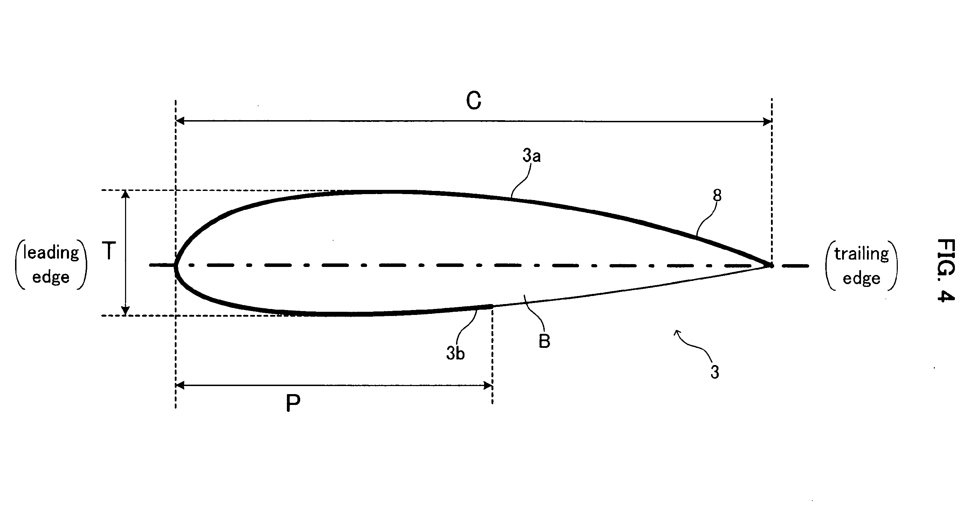

Moreover, while Fig. 3 is a principal part perspective view showing the blade of the vertical axis windmill in accordance with the embodiment of the present invention, Fig. 4 is an explanatory view regarding a blade shape of the vertical axis windmill in accordance with the embodiment of the present invention.

As shown in Figs. 3 and 4, a surface of each of the blades 3 is composed of a surface of the blade 8 formed by bending a laminated material composed of light metals, such as an aluminum alloy and a titanium alloy, or materials, such as compound materials, for example a fiber-reinforced plastic (FRP) or the like. A blade type cross section of this blade 3 is a streamlined shape having a lift coefficient equal to 1.0 or more (preferably 1.0 to 1.4), and it is particularly preferable to be a shape of an asymmetrical blade type, for example, a NACA-4 series blade type, an RAF blade type, a Gottingen blade type, or the like, used for main wings of light airplanes (airplanes whose takeoff weight is 5700 kgf or less) or the like. It should be noted that a surface (surface on an outer circumference side) having a blade type with larger bulge is defined as an outer surface of the blade 3a of the blade 3, and a surface (surface on an inner circumference side) having a blade types with smaller bulge is defined as an inner surface of the blade 3b of the blade 3 in the present embodiment.

Moreover, a rib (supporting crosspiece) 9 is inserted inside the blade 3 as shown in Fig. 3. This rib 9 is attached to insides of the outer surface of the blade 3a and the inner surface of the blade 3b of the blade 3 by rivets, adhesives, or the like to thereby prevent the blade 3 from deformation during the rotation. A notched portion B formed by cutting off a portion starting from a predetermined position to a trailing edge is then provided in a part of the inner surface of the blade 3b of this blade 3, namely, a side of the axis of rotation 2 (side of the central hub pole 4) to the blade chord.

In the hybrid type windmill 1 which has such a configuration and has the savonius effect and the gyromill effect, a pressure distribution of the outer surface of the blade 3a and the inner surface of the blade 3b is focused ahead as the blade thickness of the blade 3 is increased, so that it has a tendency that the gyromill effect is increased, whereas a ratio of a profile drag generated by the wind from the front of the blade 3 to a drag obtained by the notched portion B is increased, so that it also has a tendency that the savonius effect is decreased. Additionally, such a hybrid type windmill 1 has a tendency that the savonius effect is increased as the starting point to form the notched portion B comes closer to the leading edge side, whereas this notched portion B has a big influence on a pressure distribution around the blade, so that it also has a tendency that the gyromill effect is decreased.

For that reason, taking such characteristics into consideration, each of the blades 3 of the vertical axis windmill 1 in accordance with the present embodiment is formed of the blade type which can greatly improve the gyromill effect in the middle and high wind speed regions (6 [m/s] or more) while maintaining the superior savonius effect. As for the blade type of the blades 3, supposing that a blade chord length of the blade 3 is C, the blade thickness thereof is T, and a distance from the leading edge of the blade 3 to the starting point of the notched portion B is P as shown in Fig. 4, 0.15=(T/C)=0.30 and 0.45<(P/C)<0.65 are given. Namely, the blade thickness T of the blade 3 is 15% to 30% to the blade chord length C of the blade 3, and the starting point of the notched portion B is behind a position of 45% and before a position of 65% to the blade chord length C from the leading edge.

As described above, according to the vertical axis windmill 1 in accordance with to the present embodiment, the blades 3 thicker than the conventional one (blade type in which the blade thickness of the blade to the blade chord length is less than 15%) are used, and the starting point of the notched portion B of the inner surface of the blade 3b is also set to the trailing edge side, so that the pressure distribution of the outer surface of the blade 3a and the inner surface of the blade 3b is focused on the leading edge side of the blade 3 to thereby allow the gyromill effect to be greatly improved, while maintaining the superior savonius effect in the low wind speed region.

### [WORKING EXAMPLE]

Hereinafter, a power test performance of the vertical axis windmill in accordance with the aforementioned embodiment of the present invention and its results will be described.

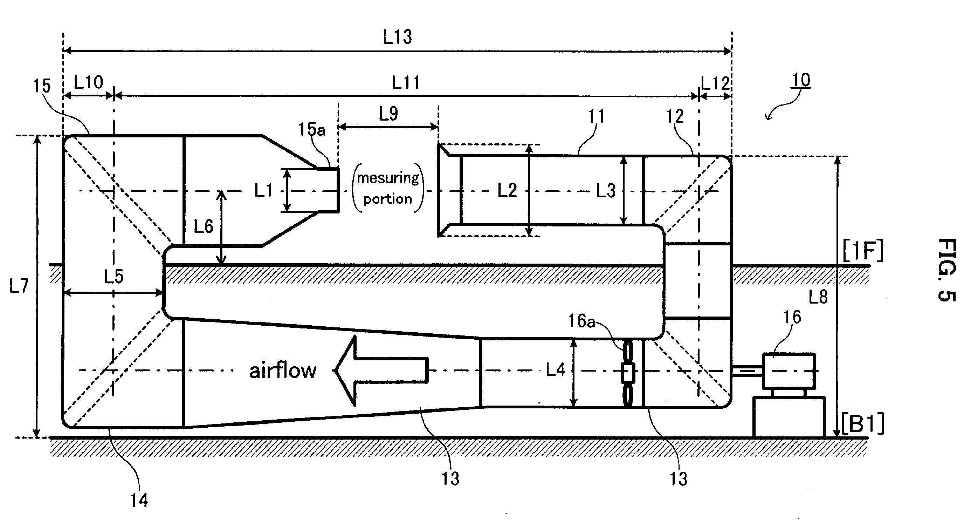

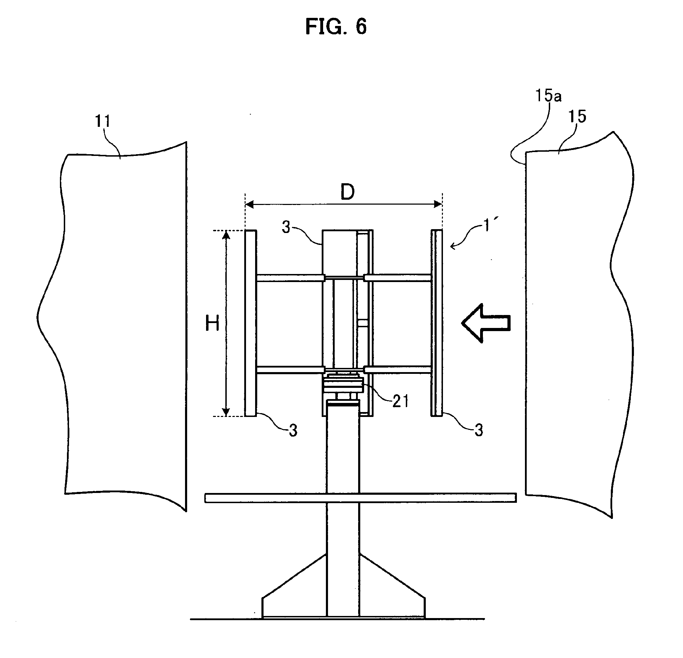

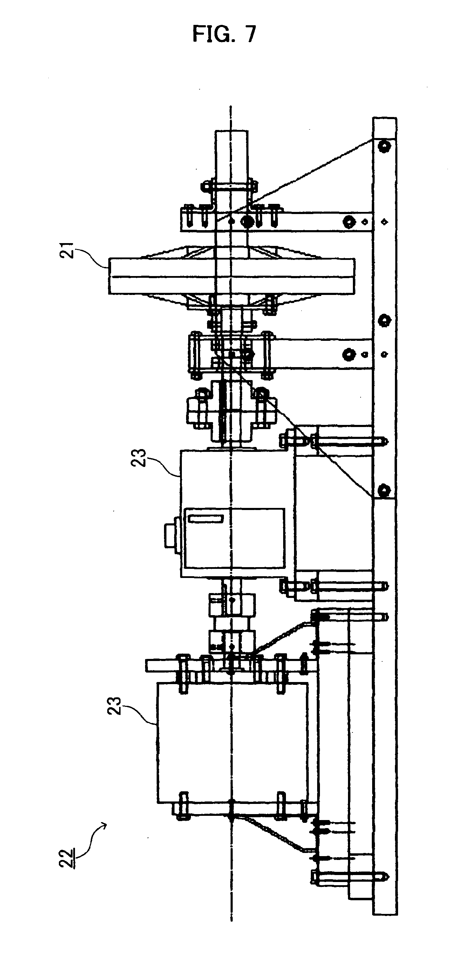

In order to confirm an output characteristic (power generation efficiency performance) when the blade thickness of the blade 3 and the position of the notched portion B in the vertical axis windmill 1 having the aforementioned configuration are changed, the power test performance of the windmill was performed using a Gottingen-type circulating wind tunnel facility (Fig. 5), a Test blade arranged to a measuring portion of the wind tunnel facility (Fig. 6), and a power generation efficiency measuring device for measuring the power generation efficiency of a generator to be set to the Test blade (Fig. 7).

In Fig. 5, a wind tunnel facility 10 set in a laboratory comprises a suction duct 11, a first varying duct 12, a second varying duct 13, a third varying duct 14, a forth varying duct 15, and an air blower 16 for rotating an impeller 16a provided in the second varying duct 13, and can blow off the wind from a blowing open section 15a of 2000 [mm] x 2000 [mm] provided in an end opening of the forth varying duct 15 at the maximum nozzle wind speed 60 [m/sec].

Meanwhile, sizes of respective portions of the wind tunnel facility 10 are as follows: L1=2000 [mm], L2=4200 [mm], L3=3200 [mm], L4=3200 [mm], L5=5000 [mm], L6=3500 [mm], L7=14158 [mm], L8=13196 [mm], L9=5000 [mm], L10=2656 [mm], L11=29900 [mm], L12=1696 [mm], and L13=34252 [mm].

According to the present wind tunnel test, a generator 21 was attached to a Test blade (windmill) 1' arranged at the measuring portion between the blowing open section 15a and the opening end of the suction duct 11 in the wind tunnel facility 10 as shown in Fig. 6, and the windmill 1' was rotated while arbitrarily changing the wind speed. In this case, the generator 21 was connected to an electronic load device, the most suitable workload was determined while changing the workload of the electronic load device, and outputs (voltage, current, electric power) at this workload were measured, so that a generating capacity of the windmill 1' in consideration of the effect of the power generation efficiency of the generator 21 was determined.

Additionally, the generator 21 used for the windmill 1' was set in power generating efficiency experimental equipment 22 as shown in Fig. 7, and experiments to determine the power generation efficiency of the generator 21 were conducted using the electronic load device and the electronic power measuring device the same as those used in the aforementioned wind tunnel test. In this experiment, a rotating moment and a rotational frequency of the generator 21 were measured using a torque meter 24 provided between the generator 21 and an electric motor 23 to then confirm an input, and the generating capacity was also measured using the electronic power measuring device to thereby determine the power generation efficiency of the generator 21.

In this wind tunnel test, the windmill 1' which has four blades 3 provided at an equal angle interval in a plane of a rotational diameter D=1200 [mm] was used as the Test blade. Subsequently, the blade length H was set to 1200 [mm], and the blade width (blade chord length) C was set to 220 [mm], and the generating capacity of each Test blade 1' to the wind speed was measured using eight Test blades 1' which have different "blade thickness ratios" or "notched position ratios" of the blade 3 as shown in Table 1. Here, the "blade thickness ratio" is a ratio of the blade thickness T to the blade chord length C of the blade 3 described in the aforementioned embodiment, and the "notched position ratio" is a ratio of the distance P from the leading edge to the notch starting point to the blade chord length C of the blade 3 described in the aforementioned embodiment.

**[Table 1]**

| | blade thickness ratio | cutout position ratio |
|---|---|---|
| Test blade (1) | 30% | 35% |
| Test blade (2) | 30% | 45% |
| Test blade (3) | 30% | 55% |
| Test blade (4) | 30% | 65% |
| Test blade (5) | 15% | 55% |
| Test blade (6) | 25% | 55% |
| Test blade (7) | 30% | 55% |
| Test blade (8) | 35% | 55% |

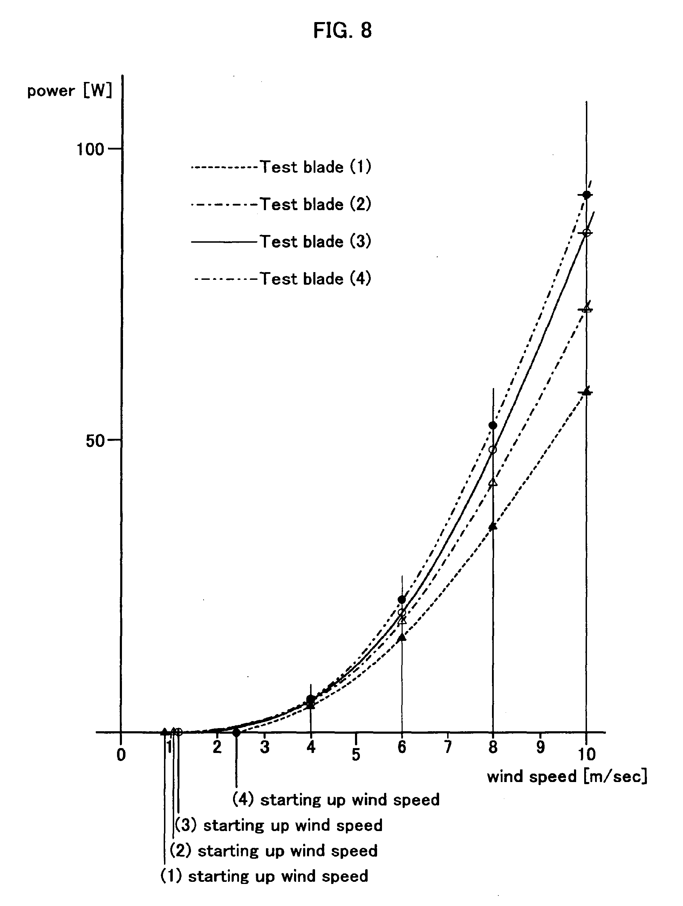

The Test blades (1) to (4) are for comparing the output characteristics when the blade thickness of the blade 3 is fixed and the position of the notch starting point of the notched portion B is changed, and the results are shown in Fig. 8. Since the notched portion B of the blade 3 has functions to allow the windmill to be started by the savonius effect even in the low wind speed, the position of the notch starting point has a great effect on the starting up wind speed of the windmill. The starting up wind speed was increased as the position of the notch starting point of the blade 3 was increased from 35% (Test blade (1)), 45% (Test blade (2)), to 55% (Test blade (3)) as shown in Fig. 8, and there was obtained a result that about twice starting up wind speed is required at 65% (Test blade (4)) as compared with that of 55%.

Meanwhile, since the rotating force is generated by the component force of advanced direction of the aerodynamic force due to the gyromill effect of the blades 3 in the middle wind speed region (6 to 12 [m/sec]), the output was increased as the position of the notch starting point of the blade 3 was increased from 35%, 45%, to 55%, but the output of 65% in the wind speed 10 [m/sec] was not increased so largely as compared with the output of 55%. This means that the notched portion B whose notched position ratio is 55% or more has not a great effect on the pressure distribution around the blade 3, thus an increase in the gyromill effect more than that can be hardly expected even when the position of the notch starting point is set to 65% or more.

Hence, the starting point of the notched portion B formed in the blade 3 is, when the power generation efficiency in the starting up wind speed and the middle wind speed is taken into consideration, preferable to be behind a position of 45% and before a position of 65% to the blade chord length C of the blade 3 from the leading edge and particularly preferable to be in a position from 45% to 55%.

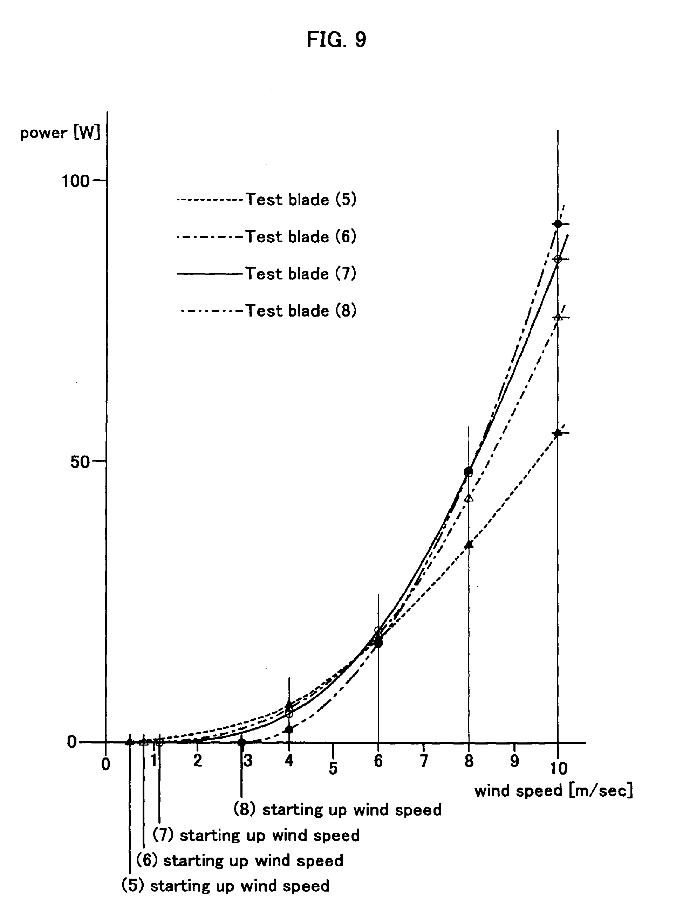

Meanwhile, the Test blades (5) to (8) are for comparing the output characteristics when the blade thickness is changed while fixing the position of the notch starting point of the blade 3 at 55% which is the most suitable ratio obtained from the output results of the aforementioned Test blades (1) to (4), and the results are shown in Fig. 9.

The drag generated when the notched portion B receives the wind from the back of the blade 3 is larger than the profile drag generated by the wind from the front of the blade 3 in the vertical axis windmill 1 as the present embodiment, and the rotating force (especially starting up force) of windmill 1 is generated due to this drag difference. When the blade thickness of the blade 3 is increased, a wind receiving area of the notched portion B will be increased, and the drag generated by the wind from the back of the blade 3 will be increased in proportion to the increase in this wind receiving area, but on the other hand, the profile drag of the blades 3 by the wind from the front of the blade 3 is also increased.

As for the starting up wind speed of each of the Test blades (5) to (8), although the starting up wind speed was slightly increased even when the blade thickness was increased in the blade thickness ratio of 15% to 30%, the increase in the starting up wind speed when the blade thickness was increased is remarkable in the blade thickness ratio 30% to 35%, as shown in Fig. 9. This means that the profile drag of the blade is largely increased when the blade thickness ratio exceeds 30%, so that a drag difference between the drag generated by the notched portion B and the profile drag is decreased to result in a reduction of the starting up moment (rotating force). Namely, although the increase in the profile drag of the blade 3 with the increase in the blade thickness is approximately constant in the blade thickness ratio of 15% to 30%, it is in the tendency that the profile drag is greatly increased when the blade thickness exceeds 30%, and thus the increase in the starting up wind speed will be largely affected.

Meanwhile, since the rotating force is generated by the component force of advanced direction of the aerodynamic force due to the gyromill effect of the blades 3 in the middle wind speed region (6 to 12 [m/sec]), the output was increased as the blade thickness ratio of the blade 3 was increased from 15% (Test blade (5)), 25% (Test blade (6)), to 30% (Test blade (7)), but the output of 35% (Test blade (8)) was not increased so largely as compared with the output of 30%. This means that although the pressure distribution of the outer surface of the blade 3a and the inner surface of the blade 3b of the blade 3 is focused ahead with the increase in the blade thickness to thereby increase the gyromill effect when the blade thickness ratio is 15% to 30%, it does not affect the pressure distribution around the blade 3 so largely when the blade thickness ratio exceeds 30% even when the blade thickness is increased more than that, and thus the increase in the gyromill effect more than that can be hardly expected even when the blade thickness ratio is increased to 30 % or more.

Hence, the blade thickness of the blade 3 is, when the power generation efficiency in the starting up wind speed and the middle wind speed is taken into consideration, preferable to be 15% to 30% to the blade chord length C of the blade 3, and particularly preferable to be in a position from 25% to 30%.

As described above, the vertical axis windmill 1 in accordance with the embodiment of the present invention employs a new blade type in which the blade thickness T of the blade 3 is 15% to 30% to the blade chord length C, and the starting point of the notched portion B is behind a position of 45% and before a position of 65% to the blade chord length C from the leading edge, thereby allowing the power generation efficiency of windmill 1 to be greatly improved in a wide range of the wind speed regions.

Moreover, since a new mechanism may not be added to the blade 3 of the vertical axis windmill 1 in accordance with the embodiment of the present invention in order to improve such performance, it can be manufactured at low cost, without expanding or complicating the device.

As mentioned above, while the embodiments and examples of the present invention have specifically been described, the present invention is not limited thereto and various changes could be suitably made without departing from the scope of the present invention.

### INDUSTRIAL AVAILABILITY

The vertical axis windmill in accordance with the present invention can effectively convert the wind force to the rotating force in a wide range of the wind speed regions from the low wind speed region to the high wind speed region, so that it is useful as, for example, the windmill for wind power generation.

## Claims

1. A vertical axis windmill, in which a plurality of blades are provided at an equal angle interval centering around a vertical axis of rotation in a plane perpendicular to the vertical axis of rotation, wherein
the blades are a streamlined asymmetrical blade type formed so as to have a lift coefficient of 1.0 or more, an outer surface of the blade being largely curved outside as compared with an inner surface;
the inner surface of the blade has a notched portion formed by cutting off a portion starting from a predetermined position to a trailing edge;
a thickness of the blade is 15% to 30% to a blade chord length of the blade; and
the predetermined position is behind a position of 45% and before a position of 65% to the blade chord length of the blade from a leading edge.

2. The vertical axis windmill according to claim 1, wherein the thickness of the blade is 25% to 30% to the blade chord length of the blade.

3. The vertical axis windmill according to claim 1 or claim 2, wherein the predetermined position is in a position of 45% to 55% to the blade chord length of the blade from the leading edge.
